# FASCICULE DE BREVET EUROPEEN

(11) **EP 0 604 314 B1**
(45) Date de publication et mention de la délivrance du brevet: **28.10.1998**
(21) Numéro de dépôt: 93403142.8
(22) Date de dépôt: 22.12.1993
(51) Int. Cl.: C03C 3/095, C03C 4/08

(54) **Compositions de verre destinées à la fabrication de vitrages**
Glaszusammensetzungen zur Herstellung von Verglasungen
Glass compositions for making glazings

(30) Priorité: 23.12.1992 FR 9215538
(43) Date de publication de la demande: 29.06.1994
(73) Titulaire: SAINT-GOBAIN VITRAGE, 92400 Courbevoie (FR)
(72) Inventeur: Mazon-Ramos, Pédro, E-33005 Oviedo (ES); Alvarez-Casariego, Pédro, E-33400 Salinas (ES)
(74) Mandataire: Breton, Jean-Claude

(56) Documents cités:
- EP-A- 0 297 404
- DE-A- 3 643 421
- FR-A- 1 162 152
- FR-A- 2 672 587
- US-A- 2 893 882
- US-A- 3 652 303

## Description

La présente invention concerne des compositions de verre aptes à la réalisation de vitrages susceptibles notamment d'être montés sur des véhicules automobiles.

Les vitrages utilisés dans ce type d'application doivent satisfaire des exigences légales relatives à leur transmission lumineuse. Ainsi, un vitrage destiné à la réalisation d'un pare-brise doit présenter actuellement dans certains pays, un facteur de transmission lumineuse globale sous illuminant A (TL_{A}) au moins égal à 75%. Les vitrages destinés à la réalisation des latéraux et de la lunette arrière doivent présenter, dans les mêmes conditions, un facteur TL_{A} au moins égal à 70%.

La surface vitrée des véhicules automobiles étant actuellement très importante, les exigences de la clientèle en matière de confort devenant de plus en plus grandes, les constructeurs de ces véhicules recherchent tous les moyens qui permettent d'atténuer la sensation de chaleur éprouvée par les passagers.

L'un des moyens est l'utilisation de vitrages dont le facteur de transmission énergétique globale (T_{E}) est le plus faible possible.

Pour maintenir une transmission lumineuse élevée dans la partie visible du spectre tout en absorbant le plus possible le reste de l'énergie solaire, il est connu d'introduire du fer dans la composition du verre. Le fer est présent dans le verre à la fois sous la forme d'oxyde ferrique (Fe₂O₃) et d'oxyde ferreux (FeO).

La présence de Fe₂O₃ permet d'absorber les radiations U.V. et celles qui possèdent de courtes longueurs d'ondes dans la partie visible du spectre ; à l'opposé, la présence de FeO permet d'absorber les radiations du proche I.R. et celles correspondant aux grandes longueurs d'ondes du domaine visible.

Si l'augmentation de la teneur en fer, sous ses deux formes oxydées, accentue l'absorption des radiations aux deux extrémités du spectre visible, cet effet est obtenu au détriment de la transmission lumineuse.

A ce jour, différentes solutions ont été proposées pour utiliser au mieux l'aptitude des oxydes de fer à absorber les radiations en conservant néanmoins la plus grande transmission lumineuse possible.

Parmi les solutions privilégiant l'absorption des radiations appartenant au domaine du proche I.R. citons à titre d'exemples les brevets suivants US-A-3 652 303 et US-A-4 792 536. Les verres décrits par ces brevets sont élaborés dans des conditions telles que la proportion de FeO par rapport au fer total est très importante ; cette proportion est au moins égale à 80% dans le premier brevet et d'au moins 35% dans le second.

La teneur en fer des verres décrits dans le brevet US-A-3 652 303 peut varier assez largement (0,1 à 2% en poids). Les courbes de transmission qui illustrent ce brevet montrent que le "Blue Glass" selon l'invention absorbe davantage dans l'I.R. que les deux verres donnés à titre de références. A noter que la bande d'absorption du "Blue Glass" déborde beaucoup plus largement dans le domaine du visible que celle du verre référencé "Green Tinted Plate".

Dans le brevet US-A-4 792 536, la teneur en fer varie dans des limites beaucoup plus étroites (0,45 à 0,65%). On peut également observer que la bande d'absorption du verre n° 5, qui illustre cette invention, déborde davantage dans le domaine du visible que celle du verre n° 3 illustrant l'art antérieur.

La présente invention a pour objet une composition de verre qui absorbe les radiations infra-rouges en conservant, voire même en augmentant le facteur de transmission lumineuse.

La présente invention a plus précisément pour objet une composition de verre dont l'absorption dans l'infra-rouge, due à la présence de FeO, s'accompagne d'une absorption beaucoup plus faible dans le visible que celle observée dans les verres connus à teneur en FeO identique.

Ces buts sont atteints grâce à une composition de verre silico-sodo-calcique qui comprend entre 0,3 et 1% en poids de fer exprimé sous la forme Fe₂O₃, au moins 35% de ce fer étant sous la forme FeO, et de 0,5 à 2,8% en poids de fluor.

La présente invention a permis de découvrir que l'introduction de fluor, selon des proportions bien déterminées, dans un verre silico-sodo-calcique contenant de l'oxyde ferreux a une influence sur les facteurs TL_{A} et T_{E} dudit verre.

La présente invention a permis notamment de découvrir que le fluor a pour effet de déplacer le maximum de la bande d'absorption due à FeO dans le proche I.R. vers de plus grandes longueurs d'ondes. Elle a permis également de constater que le fluor a aussi pour effet de redresser la pente de la bande d'absorption à l'extrémité du domaine du visible proche de l'I.R.

Par rapport à un verre silico-sodo-calcique sans fluor et contenant une teneur en FeO définie, ce double effet permet, par exemple, soit d'augmenter le facteur TL_{A} en conservant la même teneur en FeO, soit d'augmenter cette teneur de manière à diminuer le facteur T_{E} en maintenant le facteur TL_{A} à sa valeur initiale.

Selon l'épaisseur du vitrage désirée et de l'absorption dans l'I.R. recherchée, toutes les combinaisons sont évidemment possibles entre l'augmentation maximum du facteur TL_{A} et la diminution maximum du facteur T_{E}. Ce que l'invention a permis de découvrir, c'est que ce double effet n'est pas d'autant plus marqué que la proportion de fluor dans le verre est plus grande.

D'autres paramètres interviennent, en particulier, la teneur en fer total qui, pour un niveau d'oxydo-réduction défini, détermine la teneur en FeO.

Ainsi, pour des teneurs en fer total faibles ou modérées, comprises entre environ 0,3 et 0,6% en poids, la teneur efficace en fluor est comprise entre environ 0,5 et 1,5% en poids. Une teneur plus élevée en fluor ne provoque pas un déplacement supplémentaire du maximum de la bande d'absorption vers les grandes longueurs d'ondes et/ou un redressement plus important de la pente de la bande d'absorption.

Pour des verres dont la teneur en fer total est modérée ou plus élevée, comprise entre environ 0,5 et 1% en poids, la teneur efficace en fluor est comprise généralement entre 1 et 2,5% en poids.

Les verres silico-sodo-calciques susceptibles d'être utilisés dans le cadre de l'invention peuvent comprendre les constituants ci-après, dans les proportions pondérales définies par les limites suivantes :
- SiO₂: 64 à 75 %
- Al₂O₃: 0 à 5 %
- B₂O₃: 0 à 5 %
- CaO: 5 à 15 %
- MgO: 0 à 5 %
- Na₂O: 10 à 18 %
- K₂O: 0 à 5 %
la somme des oxydes alcalinos-terreux étant comprise entre 6 et 16% et celle des oxydes alcalins entre 10 et 20%.

Les exemples de verres qui figurent dans les tableaux I, II et III en annexe illustrent bien l'invention. Dans ces tableaux les valeurs des facteurs de transmission ont été calculés par rapport à un facteur de transmission lumineuse globale identique égal à 76% (tableau I) ou à 71% (tableaux II et III).

La composition de ces verres comprend les constituants suivants, dans des proportions pondérales voisines de celles données ci-après à titre indicatif :
- SiO₂: 70 %
- Al₂O₃: 1 %
- CaO: 9 %
- MgO: 4 %
- Na₂O: 14 %
- K₂O: 0,2 %
- SO₃: 0,2 %

Les compositions des verres Ex. 7 et 8 figurant dans le tableau II donnent un ordre de grandeur des fluctuations autour de cette composition moyenne.

Ces verres peuvent également comprendre en très faible quantité des constituants apportés par les impuretés des matières premières vitrifiables, tel que TiO₂ ou du fait de l'introduction de calcin dans le mélange vitrifiable. Les fluctuations autour de la composition précédente sont fonction de la teneur globale des constituants introduits dans ces verres pour modifier leurs facteurs de transmission.

Les verres ex. 1 à 6 illustrent l'influence du fluor sur le facteur de transmission énergétique globale. Ces verres comprennent approximativement la même quantité de fer total, exprimée sous la forme Fe₂O₃, et à peu près la même teneur en FeO qui reste comprise entre 0,20 et 0,23% en poids.

Le verre ex. 1 est un verre de référence sans fluor. Le verre ex. 2 est un verre intermédiaire ; les verres ex. 3 à 6 illustrent l'invention.

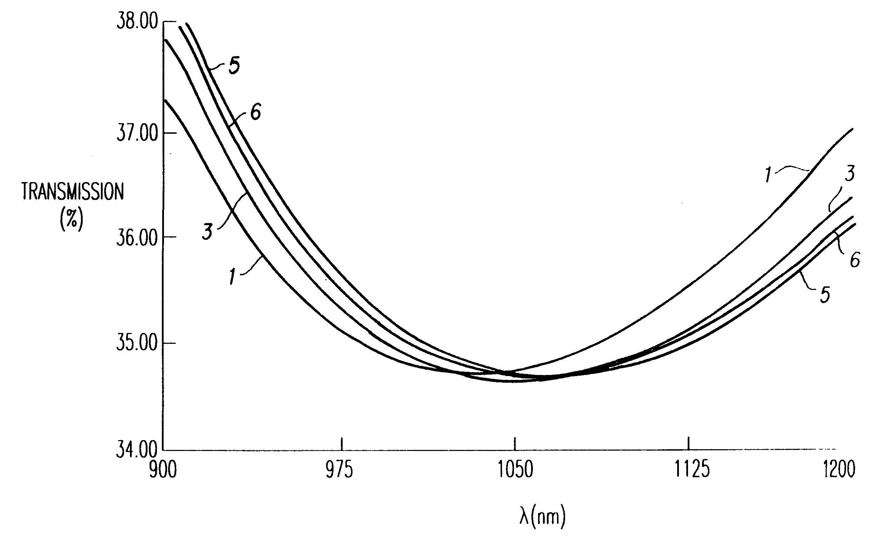

La figure en annexe représente une partie des courbes de transmission comprise entre 900 et 1200 nanomètres de quatre de ces verres.

Les chiffres de référence de ces courbes correspondent aux verres exemples homologues.

Les courbes 1, 3, 5, qui correspondent aux verres contenant respectivement 0% - 0,66% - 1,14% de fluor, présentent un décalage du maximum d'absorption de l'ordre de 15 nanomètres entre les verres ex. 1 et 3, et un nouveau décalage de l'ordre encore de 15 nanomètres entre les verres ex. 3 et 5.

Plus spectaculaire encore est le redressement de la pente de la bande d'absorption entre 900 nanomètres et le maximum de cette bande. Il faut également souligner la plus grande absorption des verres ex. 3 et 5 entre le maximum de la bande d'absorption et 1200 nanomètres.

La teneur en fluor du verre ex. 6 est plus de deux fois supérieure à celle du verre ex. 5. Or, de manière surprenante, comparativement à la courbe 5, la courbe 6 montre que l'absorption au-delà du maximum de la bande est un peu plus faible et que le redressement de la bande en deçà du maximum est moins prononcé.

Ce phénomène se retrouve dans l'évolution des facteurs de transmission. Ceux des verres ex. 1 à 6 ont été mesurés pour une épaisseur de 4,2 millimètres. A facteur de transmission lumineuse globale constant, on constate une diminution progressive du facteur T_{E} ; le verre ex. 6 présente un facteur T_{E} identique au verre ex. 3 alors que ce dernier contient une teneur en fluor quatre fois plus faible.

La connaissance d'une telle influence est particulièrement précieuse car elle permet d'obtenir l'effet maximum en utilisant la teneur minimum d'un constituant dont l'emploi peut poser des problèmes dans le domaine de la pollution atmosphérique ou qui peut être à l'origine de défauts dans le verre.

L'influence du fluor sur le facteur T_{E} d'un verre contenant un pourcentage de fer relativement élevé est illustré dans le tableau II par le verre ex. 8, comparativement au verre ex. 7 servant de référence.

L'absorption des radiations ultra-violettes par les verres selon l'invention peut être sensiblement augmentée en introduisant dans leur composition de l'oxyde de cérium. Cette augmentation de l'absorption dans l'ultra-violet peut être obtenue sans réduire l'influence du fluor décrite précédemment.

Les verres qui figurent dans le tableau III illustrent clairement ce double effet.

Les verres ex. 10 à 12, comparativement au verre ex. 9, montrent l'influence considérable de l'oxyde de cérium même lorsque ce dernier est introduit en quantité relativement faible.

Le verre ex. 13 comparativement au verre ex. 11, illustre de nouveau l'influence du fluor sur le facteur T_{E}.

Les verres selon l'invention peuvent comprendre jusqu'à 1,6% de Ce₂O₃ ; cependant, pour des raisons de coût, la teneur en Ce₂O₃ est de préférence comprise entre 0,3 et 0,8%.

Les verres selon l'invention sont compatibles avec les techniques habituelles de fabrication du verre plat sous réserve, pour certains verres, d'être élaborés dans des fours équipés d'électrodes. L'épaisseur du ruban de verre obtenu, par exemple, par nappage du verre en fusion sur un bain d'étain peut varier entre 0,8 et 10 millimètres.

La feuille obtenue par la découpe du ruban de verre peut subir ultérieurement une opération de bombage, notamment lorsqu'elle doit être montée sur un véhicule automobile.

Pour réaliser des pare-brise ou des vitrages latéraux, la feuille choisie est initialement découpée dans un ruban de verre dont l'épaisseur varie généralement entre 0,8 et 6 millimètres. Ainsi un pare-brise peut être réalisé en associant deux feuilles de verre selon l'invention, de 2,1 millimètres d'épaisseur chacune, associées à une feuille intercalaire en polyvinylbutyral. Sous ces épaisseurs les verres selon l'invention présentent, par exemple, un facteur de transmission lumineuse globale sous illuminant A d'au moins 70% et assurent un bon confort thermique.

A l'instar d'autres vitrages, les vitrages obtenus à partir des verres selon l'invention peuvent être soumis au préalable à des traitements superficiels ou être associés, par exemple, à un revêtement organique tel qu'un film à base de polyuréthanes à propriétés antilacérantes ou à un film assurant l'étanchéité en cas de bris ; il peut être revêtu localement d'une couche telle qu'une couche d'émail.

Les vitrages selon l'invention peuvent être revêtus d'au moins une couche métallique formée, par exemple d'oxyde métallique et obtenue par dépôt chimique à haute température comme la pyrolyse ou le dépôt chimique en phase vapeur (CVD) ou par dépôt sous vide.

**TABLEAU I**

| **Propriétés mesurées sous une épaisseur de 4,2 mm** | | | | | | |
|---|---|---|---|---|---|---|
| Fer total | Ex. 1 | Ex. 2 | Ex. 3 | Ex. 4 | Ex. 5 | Ex. 6 |
| Fe₂O₃ (%) | 0,43 | 0,44 | 0,45 | 0,43 | 0,42 | 0,41 |
| Rédox | 0,49 | 0,45 | 0,45 | 0,53 | 0,53 | 0,49 |
| F (%) | - | 0,29 | 0,66 | 0,92 | 1,14 | 2,67 |
| TL_{A} (%) | 76 | 76 | 76 | 76 | 76 | 76 |
| T_{E} (%) | 49,0 | 48,7 | 48,0 | 47,4 | 47,0 | 48,0 |
| T_{UV} (%) | 40,7 | 37,7 | 39,4 | 42,0 | 42,4 | 39,8 |
| λ_{D} (nm) | 490 | 490 | 490 | 490 | 491 | 491 |
| P_{c} (%) | 6,5 | 5,9 | 6,1 | 6,4 | 5,9 | 5,6 |

**TABLEAU II**

| **Propriétés mesurées sous une épaisseur de 3,85 mm** | | |
|---|---|---|
| | Ex.7 | Ex.8 |
| SiO₂(%) | 70,3 | 69,0 |
| Al₂O₃(%) | 0,71 | 0,71 |
| CaO(%) | 9,09 | 10,0 |
| MgO(%) | 4,63 | 3,95 |
| Na₂O(%) | 14,1 | 13,8 |
| K₂O(%) | 0,09 | 0,05 |
| Fe₂O₃(%) (fer total) | 0,78 | 0,70 |
| Rédox | 0,33 | 0,49 |
| F(%) | - | 1,70 |
| SO₃(%) | 0,26 | 0,10 |
| TL_{A}(%) | 71 | 71 |
| T_{E}(%) | 42,5 | 39,8 |
| T_{UV}(%) | 23,0 | 35,4 |
| λ_{D}(nm) | 494 | 490 |
| P_{c}(%) | 5 | 8 |

**TABLEAU III**

| **Propriétés mesurées sous une épaisseur de 3,85 mm** | | | | | |
|---|---|---|---|---|---|
| Fer total | Ex.9 | Ex.10 | Ex.11 | Ex.12 | Ex.13 |
| Fe₂O₃ (%) | 0,64 | 0,60 | 0,63 | 0,66 | 0,62 |
| Rédox | 0,53 | 0,58 | 0,52 | 0,49 | 0,48 |
| F (%) | 1,37 | 1,60 | 1,18 | 1,34 | - |
| Ce₂O₃ | - | 0,44 | 0,68 | 1,48 | 0,65 |
| TL_{A} (%) | 71 | 71 | 71 | 71 | 71 |
| T_{E} (%) | 40,2 | 40 | 40,5 | 40,5 | 42,1 |
| T_{UV} (%) | 36,1 | 24,5 | 20,9 | 15,8 | 17,6 |
| λ_{D} (nm) | 490 | 491 | 490 | 491 | 491 |
| P_{c} (%) | 8,6 | 7,1 | 7,9 | 7,3 | 7,5 |

## Revendications

1. Composition de verre silico-sodo-calcique destinée à la réalisation de vitrages, **caractérisée en ce qu'**elle comprend entre 0,3 et 1% en poids de fer total exprimé sous forme de Fe₂O₃, au moins 35% de ce fer étant sous la forme FeO, et de 0,5 à 2,8% en poids de fluor.

2. Composition de verre selon la revendication 1, **caractérisée en ce que** pour une teneur en fer total comprise entre 0,3 et 0,6%, sa teneur en fluor est maintenue entre 0,5 et 1,5%.

3. Composition de verre selon la revendication 1, **caractérisée en ce que** pour une teneur en fer total comprise entre 0,5 et 1%, sa teneur en fluor est maintenue entre 1 et 2,5%.

4. Composition de verre selon l'une des revendications 2 et 3, **caractérisée en ce qu'**elle comprend jusqu'à 1,6% en poids de Ce₂O₃.

5. Composition de verre selon la revendication 4, **caractérisée en ce qu'**elle comprend de 0,3 à 0,8% en poids de Ce₂O₃.

6. Vitrage destiné à être monté sur un véhicule automobile, **caractérisé en ce qu'**il comprend au moins une feuille de verre dont la composition est définie par l'une quelconque des revendications précédentes et dont l'épaisseur est comprise entre 0,8 et 6 millimètres.

7. Vitrage selon la revendication 6, **caractérisé en ce qu'**il comprend au moins une feuille de verre qui présente un facteur de transmission lumineuse globale sous illuminant A d'au moins 70% pour une épaisseur comprise entre 0,8 et 6 millimètres.

## Claims

1. Soda-lime-silica glass composition for producing glazings, characterized in that it contains between 0.3 and 1% by weight total iron expressed in the form Fe₂O₃, at least 35% of said iron being in the form FeO, and 0.5 to 2.8% by weight fluorine.

2. Glass composition according to claim 1, characterized in that for a total iron content between 0.3 and 0.6%, its fluorine content is kept between 0.5 and 1.5%.

3. Glass composition according to claim 1, characterized in that for a total iron content between 0.5 and 1%, its fluorine content is kept between 1 and 2.5%.

4. Glass composition according to one of the claims 2 and 3, characterized in that it incorporates up to 1.6% by weight Ce₂O₃.

5. Glass composition according to claim 4, characterized in that it incorporates 0.3 to 0.8% by weight Ce₂O₃.

6. Glazing intended to be fitted on a car, characterized in that it comprises at least one glass sheet, whose composition is defined by any one of the preceding claims and whose thickness is between 0.8 and 6 millimetres.

7. Glazing according to claim 6, characterized in that it comprises at least one glass sheet having a total light transmission factor under illuminant A of at least 70% for a thickness between 0.8 and 6 millimetres.

## Patentansprüche

1. Kalk-Natron-Silicatglas-Zusammensetzung zur Herstellung von Verglasungen, **dadurch gekennzeichnet, daß** sie zwischen 0,3 und 1 Gew.-% als Fe₂O₃ ausgedrücktes Gesamteisen, wobei mindestens 35 % dieses Eisens in Form von FeO vorliegt, und 0,5 bis 2,8 Gew.-% Fluor umfaßt.

2. Glaszusammensetzung nach Anspruch 1, **dadurch gekennzeichnet, daß** ihr Fluorgehalt bei einem Gesamteisengehalt zwischen 0,3 und 0,6 % auf zwischen 0,5 und 1,5 % gehalten wird.

3. Glaszusammensetzung nach Anspruch 1, **dadurch gekennzeichnet, daß** ihr Fluorgehalt bei einem Gesamteisengehalt zwischen 0,5 und 1 % auf zwischen 1 und 2,5 % gehalten wird.

4. Glaszusammensetzung nach Anspruch 2 oder 3, **dadurch gekennzeichnet, daß** sie bis zu 1,6 Gew.-% Ce₂O₃ enthalt.

5. Glaszusammensetzung nach Anspruch 4, **dadurch gekennzeichnet, daß** sie 0,3 bis 0,8 Gew.-% Ce₂O₃ enthalt.

6. Verglasung für den Einbau in ein Kraftfahrzeug, **dadurch gekennzeichnet, daß** sie wenigstens eine Glasscheibe umfaßt, deren Zusammensetzung durch einen der vorhergehenden Ansprüche festgelegt ist und deren Dicke 0,8 bis 6 Millimeter beträgt.

7. Verglasung nach Anspruch 6, **dadurch gekennzeichnet, daß** sie wenigstens eine Glasscheibe umfaßt, welche bei einer Dicke von 0,8 bis 6 Millimeter unter der Normlichtart A einen globalen Lichttransmissionsgrad von mindestens 70 % besitzt.
